# EUROPEAN PATENT APPLICATION

(11) **EP 1 283 533 A2**
(43) Date of publication of application: **12.02.2003**
(21) Application number: 02078339.5
(22) Date of filing: 09.08.2002
(51) Int. Cl.: H01F 27/06

(54) **Arrangement for assembling a coil on a core**

(30) Priority: 09.08.2001 BR 8102102
(71) Applicant: INDUSTRIA DE MOTORES ANAUGER LTDA., Itupeva, SP (BR)
(72) Inventor: Pastori, Aurelio, Estado de Sao Paulo (BR)
(74) Representative: Eidelsberg, Olivier Nathan

(57) **Abstract**

This abstract refers to a utility model patent for assembling a coil on a core, belonging to the field of electromagnetics, in particular vibratory pump circuits, the arrangement of which has been devised in order to improve the performance and useful life of the circuit and consists essentially of two coil protectors (10), which are intercalated between the respective coils (4) and the corresponding branches of the core (2), defining spaces (11) between the coils and the core, which are filled with a resin filling (7); each coil protector (10) comprises essentially: a substantially square-shaped lower section (12) which is assembled around the bottom end of the longitudinal branch (2) of the core; and corner rods (13) and inteimediateF rods (14) projecting at right from the square (12), which are intercalated between the coil (4) and the branch (4).

## Description

This description relates to a utility model patent for assembling a coil on a core, belonging to the field of electromagnetic circuits, in particular vibratory pump circuits, the arrangement of which has been devised in order to improve the performance and useful life of the circuit.

A vibratory pump is already known that includes, among other things, an electromagnetic circuit which consists of a coil and a core and which causes a member to transmit movement to movable components of the pump, responsible for uptaking and pressurising the water. In the habitual construction, the aforementioned assemblage, consisting of the coil and core, is assembled and housed in a lower section of the body of the pump, connected to an electrical power supply cable which projects outside the hole of the body of the pump and is encapsulated with a resin filling.

Although this construction carries out the functions for which it is intended, it has the disadvantage that the wire of the coil vibrates when the pump is switched on. In time, this can cause the wire to shear and consequently burn out the circuit.

Thus, an objective of the arrangement which is the subject of this utility model patent is to provide a way of assembling the coil on the core which overcomes the abovementioned problem.

Another objective is to provide an assemblage which does not complicate construction and the process for manufacturing the pump.

Another objective is to provide an assemblage which, despite the abovementioned advantages, does not increase the cost of the pump.

Therefore, bearing in mind the problems described above and in order to overcome them and also meet the respective objectives, the arrangement for assembling the coil on the core as described in this utility model patent was developed. Thus, the core is a "U" type and the respective coils are wound round the parallel branches. This assemblage consists essentially of providing two plastic coil protectors, one for each coil wound round the respective branch of the core and comprising essentially: a square-shaped section which is situated around the base of the branch of the core; and rods which project at a right angle from the lower square-shaped section and which are situated in the corners and on the sides of the branches of the core and are intercalated between said corners and sides and the coil, in order to form gaps between the coil and the core, which are also filled with a resin filling.

The coil protectors isolate the coil from the core, maintaining a uniform distance in all directions, and in view of their geometry they are able to penetrate the resin filling between the coil and the core, in order to lock the whole electrical circuit, thus preventing the wire of the coil from vibrating and shearing and the circuit from burning.

Thus, this assemblage resolves the problem which usually arises, thereby extending the useful life of the electrical circuit and consequently of the pump as a whole.

The drawings attached hereto show the arrangement of the coil on the core which is the subject of this utility model, wherein:

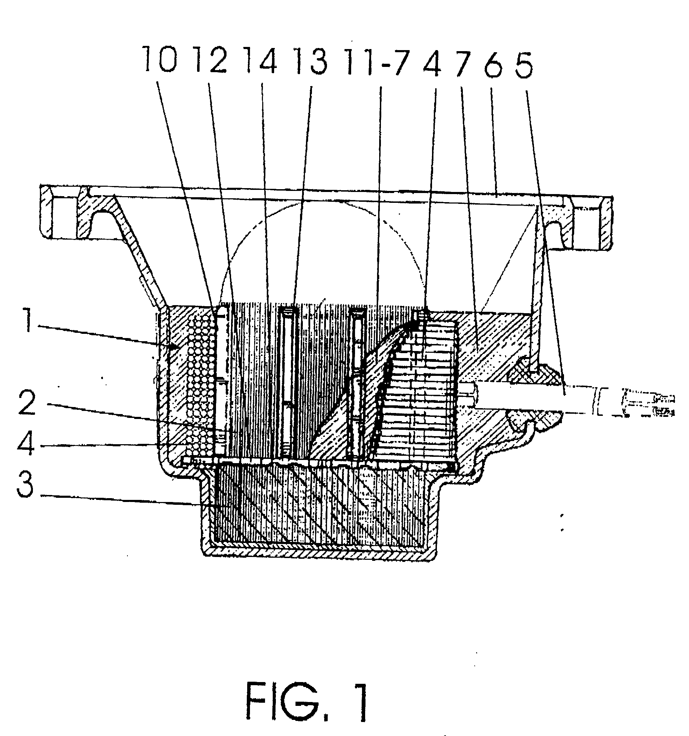

figure 1 shows a side view and cross section of the body of the pump, with the coil assembled according to the arrangement described herein; and

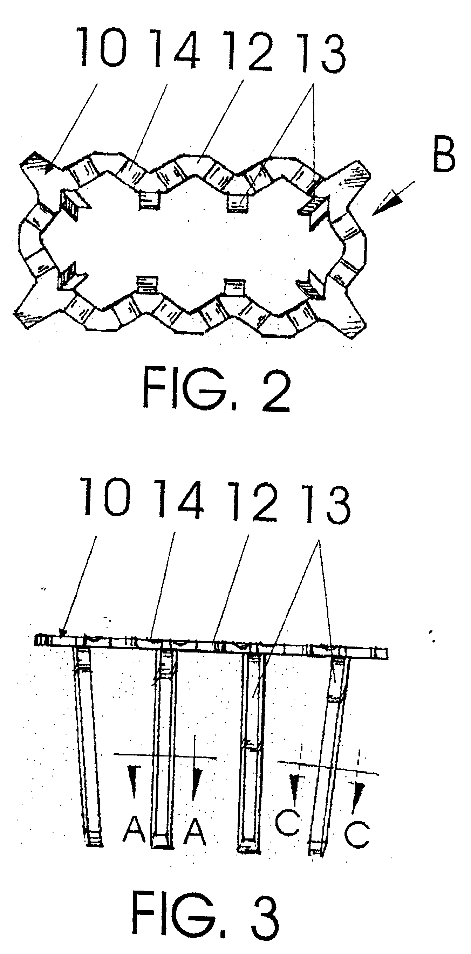

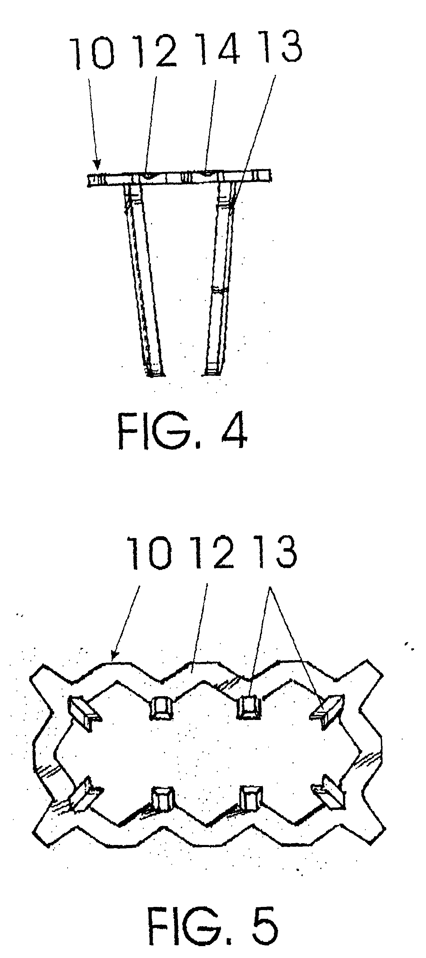

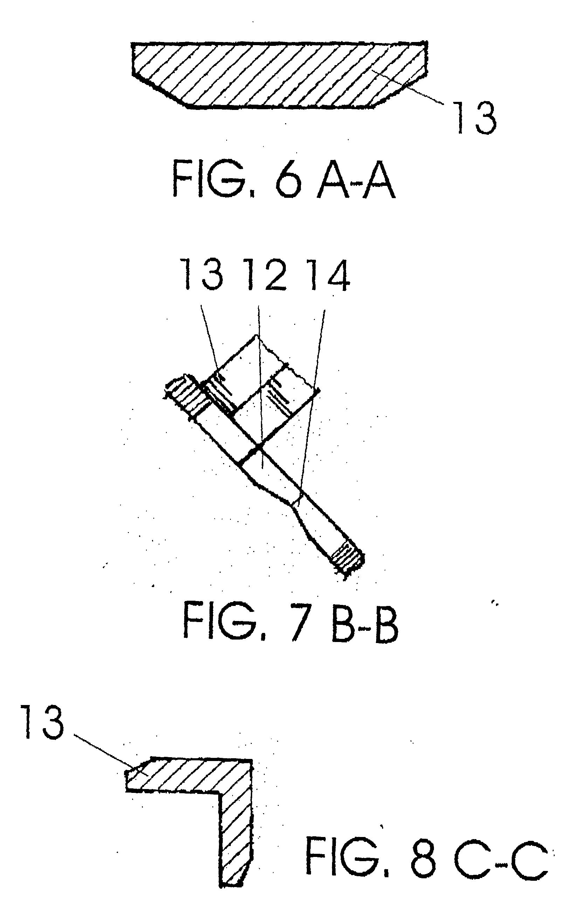

figures 2 to 8 show various views and details of a pump protector, which forms part of the assemblage.

In accordance with the abovementioned figures, the assemblage which is the subject of the present utility model patent applies to the pump and core of an electromagnetic circuit, in particular the electromagnetic circuit of a vibratory pump, comprising essentially, among other things: an electromagnetic circuit 1, responsible for the movement of a member (not illustrated) which transmits movement to movable parts of the pump (not illustrated) responsible for uptaking and pressurising the water; said electromagnetic circuit consists of: a "U" shaped core 2-3 formed by two parallel longitudinal branches 2 and a transverse branch 3 which interconnects the longitudinal branches; and coils 4 wound round the respective parallel branches 2 of the core; said electromagnetic circuit also comprises an electrical power supply cable 5; the body of said pump is formed by, among other things, a lower section (body of the pump) 6, inside which the electromagnetic circuit 1 is housed and assembled and which is equipped with a radial hole for the electric cable to exit; and a resin filling 7 for encapsulating the circuit.

This arrangement consists of assembling two coil protectors 10, which are intercalated between the respective coils 4 and the corresponding branches of the core 2, defining spaces 11 between the coils and the core, which are filled with the resin filling 7, thus isolating the coils 4 from the core 2-3 and mechanically locking the whole assemblage, which prevents the wires of the coil 4 from vibrating and shearing from occurring over time, thus burning out the circuit.

Each coil protector 10 comprises essentially: a substantially square-shaped lower section 12 which is assembled around the bottom end of the longitudinal branch 2 of the core, which forms a corner with the transverse branch 3; and corner rods 13 and intermediate rods 14 projecting at right angles from the corners and bigger sides of the square, which are positioned in the corners and on the sides of the branch 2 of the core and are intercalated between the core and the coil 4, thus defining between said branch 2 of the core and the coil 4 the spaces 11; these and the spaces between the coils and between the coils and the wall of the body of the pump and the spaces between the transverse branch 3 of the core and the walls of the body of the pump are filled with the resin filling 7. The side of the square 12 which faces downwards to the side of the transverse branch 13 has hollows 14 for the resin to circulate.

The coil protectors are made of a suitable plastic material.

Thus, the electromagnetic circuit functions in the habitual way, only when it is activated there is no vibration of the coil wires, thereby avoiding the problems which usually arise, as mentioned above.

Within the basic construction described above, the assemblage which is the subject of this utility model can be modified in terms of the materials used, dimensions, construction details and/or configuration, without exceeding the scope of protection requested.

## Claims

1. "ARRANGEMENT FOR ASSEMBLING A COIL ON A CORE", which forms part of an electromagnetic circuit (1), comprising: a "U" shaped core (2)-(3) formed by two parallel longitudinal branches (2) and a transverse branch (3); coils (4) wound round the respective parallel branches (2); an electrical power supply cable (5); said circuit preferentially forming part of a vibratory water pressure pump the body of which is formed by, among other things, a lower section (body of the pump) (6), inside which the electromagnetic circuit (1) is housed and assembled; and a resin filling (7) for encapsulating the circuit, **characterised in that** it consists of assembling two coil protectors (10), which are intercalated between the respective coils (4) and the corresponding branches of the core (2), defining spaces (11) between the coils and the core, which are filled with the resin filling (7); each coil protector (10) comprises essentially: a substantially square-shaped lower section (12) which is assembled around the bottom end of the longitudinal branch (2) of the core, which forms a corner with the transverse branch (3); and corner rods (13) and intermediate rods (14) projecting at right angles from the corners and the bigger sides of the square (12), which are positioned in the corners and on the sides of the branch (2) of the core and are intercalated between the core and the coil (4), thus defining between said branch (2) of the core and the coil (4) the spaces (11); these and the spaces between the coils and between the coils and the wall of the body of the pump and the spaces between the transverse branch (3) of the core and the walls of the body of the pump are filled with the resin filling (7), providing a mechanical locking mechanism between the parts of the circuit and between the circuit and the body of the pump; the side of said square (12) faces downwards to the side of the transverse branch (3) and has hollows (14) for the resin to circulate.
